# EUROPEAN PATENT SPECIFICATION

(11) **EP 1 443 788 B1**
(45) Date of publication and mention of the grant of the patent: **07.05.2008**
(21) Application number: 03029250.2
(22) Date of filing: 18.12.2003
(51) Int. Cl.: H04Q 7/38, H04Q 7/32

(54) **Frequency searching method and apparatus in mobile communications**
Frequenzsuchmethode und Apparatus in einem Mobilfunksystem
Procédé et dispositif pour la recherche d'une fréquence dans un système de communication mobile

(30) Priority: 31.12.2002 KR 2002088348
(43) Date of publication of application: 04.08.2004
(73) Proprietor: LG ELECTRONICS INC., Seoul (KR)
(72) Inventor: So, Hyeoun-Joo, Gyeonggi-Do (KR)
(74) Representative: Katérle, Axel

(56) References cited:
- WO-A-00/78075
- WO-A-01/26409
- US-A- 5 734 980

## Description

### BACKGROUND OF THE INVENTION

### 1. Field of the Invention

Embodiments of the present invention relate to mobile communications. More particularly, embodiments of the present invention relate to a cell searching method for a mobile communication terminal.

### 2. Background of Related Art

With the rapid progress of mobile radio communication techniques, the number of mobile radio communication terminals has greatly increased. However, when transmitting a quantity of data greater than voice communication data to a mobile radio telephone through a radio connection network, a mobile radio communication system may not be able to keep up with wire communication systems. IMT-2000 is one communication system to perform a large quantity of data communication.

Universal Mobile Telecommunications System (UMTS) is a third generation mobile communication system. European IMT-2000 system is developed from Global System for Mobile (GSM) communication. UMTS has as a goal to provide more improved mobile communication service based on GSM core network and Wideband Code Division Multiple Access (WCDMA) techniques.

WO 00/78075 A1 discloses a scanning operation in a mobile terminal that includes storing identifiers of sub-carrier frequencies known to be in use without regard to the operator identity or location of use. A first scanning of only sub-carrier frequencies identified by the stored identifiers is performed in an attempt to find a used sub-carrier frequency. If no used sub-carrier frequencies are found in the first scanning, then a second scanning of sub-carrier frequencies that are not associated with the stored identifiers is performed.

US 5,734,980 discloses a method for selecting a preferred system for wireless communications with a mobile terminal or subscriber by scanning a range of operation frequencies to detect wireless systems. Each time a wireless system is detected, a determination is made as to whether the detected wireless system is a most preferred system or a lesser preferred system for the mobile terminal or subscriber. If the detected wireless system is determined to be the most preferred system, scanning is terminated and the detected wireless system is selected. If the detected wireless system is determined to be one of the lesser preferred system, selection information for the detected wireless system is stored in a memory subsystem of the mobile terminal and scanning continues.

WO 01/26409 A1 discloses a network preparing a capabilities message which is broadcast by a base station to advise mobile users equipment units of services supported by the base station. The capabilities message includes a bit map which contains, for each potential service, a bit indicating whether that service is supported. The capabilities message contains preferred network identifiers. These preferred network identifiers correspond to the preferred network available for each supported service.

### SUMMARY OF THE INVENTION

The invention provides a method according to claim 1 and an apparatus according to claim 7.

Embodiments of the present invention may provide a frequency searching method for a mobile communication terminal capable of managing frequency bands more efficiently when performing cell searching for a global roaming service.

Embodiments of the present invention may provide a frequency searching method capable of quickly and efficiently searching frequencies of several service vendors.

Embodiments of the present invention may include receiving system information from a network, obtaining a usage frequency of each service vendor from the received system information, storing the usage frequency, and searching the stored frequencies.

Embodiments of the present invention may further include performing a cell search of pre-stored frequencies of pertinent service vendors.

A usage frequency of each service vendor may be stored in an internal memory of user equipment (UE).

The system information may be included in a System Information Block (SIB). The SIB, including a usage frequency of each service vendor, may be transmitted through a Broadcast Control Channel (BCC).

Embodiments of the present invention may include performing a cell search by frequency bands when a requested frequency is not found in the stored frequencies of the pertinent service vendor.

The pre-stored frequencies may be updated by receiving the system information from the network.

Embodiments of the present invention may include receiving usage frequency of service vendors from a network and storing the received frequency data in a UE (user equipment). A cell search of the pre-stored frequencies of pertinent service vendors may be performed in a frequency search. A cell search may again be performed by frequency bands when a requested frequency is not found in the pre-stored frequencies of the pertinent service vendor.

The usage frequency may be transmitted through a System Information Block (SIB). The network may be a Radio Resource Control (RRC) of a UTRAN. The SIB may be transmitted through a BCCH.

Embodiments of the present invention may further include updating pre-stored frequencies by receiving system information from the network.

Additional advantages, objects, features and embodiments of the present invention will be set forth in part in the description that follows and in part will become apparent to those having ordinary skill in the art upon examination of the following or may be learned from practice of the invention.

### BRIEF DESCRIPTION OF THE DRAWINGS

The following represents brief descriptions of the drawings in which like reference numerals represent like elements and wherein:

Figure 1 is a block diagram illustrating a Universal, Mobile Telecommunications System (UMTS) network according to an example arrangement;

Figure 2 is a schematic view illustrating a UMTS radio access interface protocol according to an example arrangement; and

Figure 3 is a flowchart illustrating a frequency searching method according to an example embodiment of the present invention.

### DETAILED DESCRIPTION OF PREFERRED EMBODIMENTS

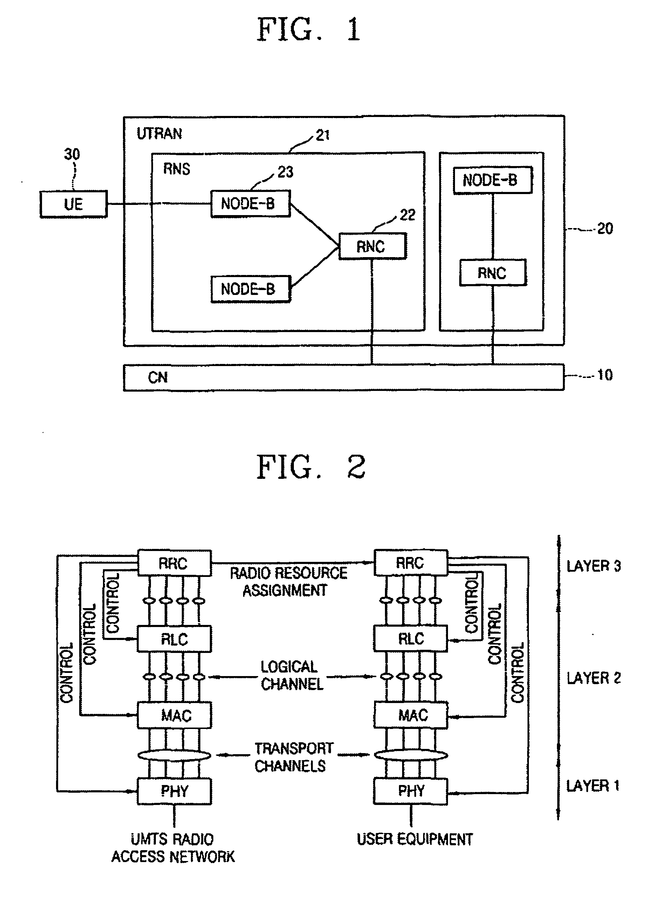

Figure 1 shows a network structure of a UMTS according to an example arrangement. Other arrangements are also possible. The UMTS includes a user equipment (UE) 30, a UMTS terrestrial radio access network (UTRAN) 20 and a core network (CN) 10. The UTRAN 20 may include at least one Radio Network Sub-system (RNS) 21. Each RNS 21 may include a radio network controller (RNC) 22 and at least one node-B (base station) 23.

The RNC 22 may allocate and manage radio resources, as well as perform an access point function to the CN 10. The node-B 23 may perform an access point function between the UE 30 and the UTRAN 20 by receiving information from a physical layer of the UE 30 in an upward link and transmitting data to the UE 30 in a downward link.

One function of the UTRAN 20 is to construct and maintain a Radio Access Bearer (RAB) for communication between the UE 30 and the CN 10. The CN 10 may apply quality of service (QoS) requirements of end-to-end for the RAB. The RAB may support the QoS requirement set by the CN 10. Accordingly, the UTRAN 20 may satisfy the QoS requirement of end-to-end by constructing and maintaining the RAB.

Figure 2 is a schematic view illustrating a radio access interface protocol of the UMTS according to an example arrangement. Other arrangements are also possible.

In the UMTS, the radio access interface protocol between the UE 30 and the UTRAN 20 may be based on a radio access network standard of 3GPP (third generation partnership project) and use an Open System Interconnection (OSI) standard model widely known in communication systems as a reference model.

As shown in Figure 2, a Radio Resource Control (RRC) layer may be arranged at a top portion of a plurality of UMTS radio protocols and be related to setting, resetting and release of Radio Bearer (RBs). The RRC layer may control a transmission channel and a physical channel. The RB may correspond to a service provided for data transmission between the UE 30 and the UTRAN 20. In general, the RB setting corresponds to a process for defining protocol layers and channel characteristics required for a certain service and setting for each detailed parameter and operation method.

The UMTS has as a goal to provide a wideband service and a global roaming service. The UMTS may have a same standard and use a frequency in a same band all over the world.

In the UMTS, in order to provide the roaming service, a frequency band may be fixed and adjusted by each service vendor. Accordingly, the UE 30 may scan a frequency band allocated to each service vendor, store a cell-searched (frequency scan) frequency in a NV Random Access Memory (RAM) and use the stored frequency information in a next cell search.

In order to provide a global roaming service for the UMTS, a full scan may be needed. In the UMTS, in order to provide the global roaming service, the UE may fully scan a frequency band allocated to each service vendor. This may delay a cell search time.

However, accuracy may be lowered in the cell search by using frequency information obtained from previous cell searches. Accordingly, in order to provide a global roaming service in the UMTS, more efficient band management may be needed.

Embodiments of the present invention may provide a method for searching frequencies allocated to service vendors. A Radio Resource Control (RRC) layer in a UMTS Terrestrial Radio Access Network (UTRAN) may construct a System Information Block (SIB) by associating frequency information with each service vendor and transmitting the information to the UE 30 through a Broadcast Control Channel (BCCH).

The UE 30 may obtain the frequency of each service vendor from the received SIB. The UE 30 may store the information in an internal memory and use the frequency in a next frequency scan. In this discussion, a frequency of each service vendor is considered to have already been stored in an internal memory.

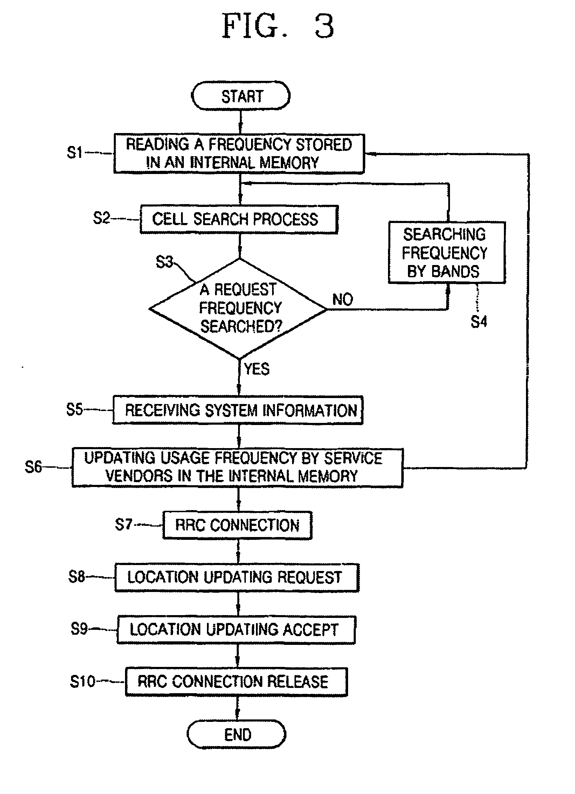

Figure 3 is a flowchart illustrating a frequency searching method according to an example embodiment of the present invention. Other operations, orders of operations and embodiments are also within the scope of the present invention.

The UE 30 may search an appropriate cell when a user turns on the power of the UE 30. In order to search the appropriate cell, the UE 30 may read a frequency stored in an internal memory as shown in block S1. The UE may perform a cell search process about the frequency of the pertinent service vendor as shown in block S2.

In order to search the frequency of the pertinent service vendor stored in the memory, the UE 30 may search using a slot synchronous methodology by using a first synchronization code of a Synchronization Channel (SCH) and recognize a frame synchronization and a code group ID using a second synchronization code. When using the slot synchronization methodology, frame synchronization and code group recognition may be normally performed. The UE 30 may search a frequency and access a communication channel through a process for recognizing a pertinent scrambling code from a plurality of scrambling codes of a recognized code group.

In block S3, a determination is made whether a requested frequency is found among the stored frequencies of the pertinent service vendor. When the requested frequency is not found, the UE 30 may search frequencies by bands as shown in block S4.

When a communication channel is connected between the network 20 and the UE 30, the UE 30 may receive system information through the BCCH channel as shown in block S5. The UE 30 may update a service vendor usage frequency of each service vendor stored in the memory as shown in block S6. The updated frequency in the memory may be used for a next frequency scan. The UE 30 may perform a cell search about a frequency band of a pertinent service vendor rather than about all frequency bands. Accordingly, embodiments of the present invention may reduce a cell search time.

Afterward, in the communication connection state, a call originating or call incoming is requested, a RRC as a protocol entity of the UE 30 transmits a RRC connection request message to the UTRAN 20 through a Random Access Channel (RACH). The UTRAN 20 may transmit a RRC connection setup message to the UE 30 through a Forward Access Channel (FACH). Accordingly, the UE 30 may perform a RRC connection setup according to the RRC connection setup message. The UE 30 may transmit a RRC connection setup complete message to the UTRAN 20 through a Dedicated Channel (DCH).

Accordingly, when the UE 30 successfully transmits the RRC connection setup message, the UE 30 may be RRC-connected with the UTRAN 20. The UE 30 may perform state transition to a connected mode receivable/transmittable user traffic as shown in block S7.

Afterward, the UE 30 may perform a location updating request to the UTRAN 20 as shown in block S8. When the UTRAN 20 checks the current location of the UE 30 and transmits the current location information, the UE 30 may update location information and notify the UTRAN 20 of a location updating accept as shown in block S9. In block S10, the RRC connection may be released. Accordingly, the registration of global roaming service may be finished.

When a channel error or communication ends in the communication connection state, the RRC acts as a protocol entity of the UE 30 and transmits a RRC connection release message to the UTRAN 20 through the DCH. The UTRAN 20 may release call connection for communication by transmitting a RRC connection release complete message to the UE 30 through the DCH as shown in block S10.

As described above, frequency information allocated to service vendors may be received by the UE as a SIB. This information may be stored in an internal memory of the UE. A channel may be searched about the stored frequencies so that it is possible to quickly search frequencies. Accordingly, it is possible to improve a cell search operation and reduce a registration time.

Embodiments of the present invention may include a mobile communication device having a receiving/transmitting device to receive and transmit information with a network and a memory to store information (such as usage information of service vendors). A processing device may also perform various operations as discussed above including obtaining a usage frequency of service vendors, performing a cell search of frequencies stored in memory and updating the memory.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art.

## Claims

1. A frequency searching method comprising:
- receiving usage frequency data of at least one service vendor from a network (20);
- storing the usage frequency data in relation to each respective service vendor in user equipment (30);
- performing (S2) a cell search at a stored usage frequency associated with a specific service vendor; and
- performing (S4) another cell search based on frequency band scanning if no cell search at a stored usage frequency associated with the specific service vendor is successful.

2. The method of claim 1, wherein the user equipment (30) comprises a mobile communication terminal.

3. The method of claim 1, wherein the usage frequency data is transmitted in a system information block from the network.

4. The method of claim 3, wherein the system information block is transmitted through a broadcast control channel.

5. The method of claim 1, wherein the network comprises a Radio Resource Control of a UMTS Terrestrial Radio Access Network (20).

6. The method of claim 1, wherein the stored usage frequency data is updated (S6) based on received system information from the network (20).

7. A mobile communication apparatus, comprising:
- a receiving device configured to receive usage frequency data of at least one service vendor from a network (20);
- a memory to store the usage frequency data in relation to each respective service vendor; and
- a processing device configured to obtain (S1) a stored usage frequency associated with a specific service vendor from the memory, perform (S2) a cell search at the obtained usage frequency, and perform (S4) another cell search based on frequency band scanning if no cell search at a stored usage frequency associated with the specific service vendor is successful.

8. The apparatus of claim 7, wherein the processing device is configured to update (S6) the stored usage frequency data based on received system information from the network (20).

## Patentansprüche

1. Frequenzsuchverfahren, umfassend:
- Empfangen von Nutzfrequenzdaten zumindest eines Dienstanbieters von einem Netzwerk (20);
- Speichern der Nutzfrequenzdaten bezüglich jedes entsprechenden Dienstanbieters in einem Nutzergerät (30);
- Durchführen (S2) einer Zellsuche bei einer gespeicherten Nutzfrequenz, die einem speziellen Dienstanbieter zugeordnet ist;
und
- Durchführen (S4) einer weiteren Zellsuche unter Abtasten eines Frequenzbands, falls keine Zellsuche bei einer gespeicherten Nutzfrequenz, die dem speziellen Dienstanbieter zugeordnet ist, erfolgreich ist.

2. Verfahren nach Anspruch 1, wobei das Nutzergerät (30) ein Mobilkommunikationsendgerät aufweist.

3. Verfahren nach Anspruch 1, wobei die Nutzfrequenzdaten in einem Systeminformationsblock vom Netzwerk gesendet werden.

4. Verfahren nach Anspruch 3, wobei der Systeminformationsblock über einen Broadcast-Steuerkanal übertragen wird.

5. Verfahren nach Anspruch 1, wobei das Netzwerk eine Funkressourcensteuerung eines terrestrischen UMTS-Funkzugangsnetzwerks (20) aufweist.

6. Verfahren nach Anspruch 1, wobei die gespeicherten Nutzfrequenzdaten basierend auf vom Netzwerk (20) empfangenen Systeminformationen aktualisiert werden (S6).

7. Mobilkommunikationsvorrichtung, mit:
- einer Empfangseinrichtung, die dazu ausgestaltet ist, Nutzfrequenzdaten zumindest eines Dienstanbieters von einem Netzwerk (20) zu empfangen;
- einem Speicher zum Speichern der Nutzfrequenzdaten bezüglich jedes entsprechenden Dienstanbieters; und
- einer Verarbeitungseinrichtung, die dazu ausgestaltet ist, eine gespeicherte Nutzfrequenz, die einem speziellen Dienstanbieter zugeordnet ist, aus dem Speicher zu holen, eine Zellsuche bei der erhaltenen Nutzfrequenz durchzuführen (S2) und eine weitere Zellsuche unter Abtastung eines Frequenzbands durchzuführen (S4), falls keine Zellsuche bei einer gespeicherten Nutzfrequenz, die dem speziellen Dienstanbieter zugeordnet ist, erfolgreich ist.

8. Vorrichtung nach Anspruch 7, wobei die Verarbeitungseinrichtung dazu ausgestaltet ist, die gespeicherten Nutzfrequenzdaten basierend auf vom Netzwerk (20) erhaltenen Systeminformationen zu aktualisieren (S6).

## Revendications

1. Procédé de recherche de fréquences comprenant :
- la réception de données de fréquences d'utilisation d'au moins un distributeur de services en provenance d'un réseau (20) ;
- la mémorisation des données de fréquences d'utilisation liées à chaque distributeur de services respectif dans l'équipement (30) d'utilisateur ;
- la réalisation (S2) d'une recherche de cellule à une fréquence d'utilisation mémorisée associée à un distributeur de services précis ; et
- la réalisation (S4) d'une autre recherche de cellule en fonction du balayage de bandes de fréquences, si aucune recherche de cellule à une fréquence d'utilisation mémorisée associée au distributeur de services précis n'est réussie.

2. Procédé selon la revendication 1, dans lequel l'équipement (30) d'utilisateur comprend un terminal de communication mobile.

3. Procédé selon la revendication 1, dans lequel les données de fréquences d'utilisation sont transmises dans un bloc d'informations de système en provenance du réseau.

4. Procédé selon la revendication 3, dans lequel le bloc d'informations de système est transmis au moyen d'un canal de gestion de diffusion.

5. Procédé selon la revendication 1, dans lequel le réseau comprend une gestion de ressources radio d'un réseau (20) d'interface radio UMTS.

6. Procédé selon la revendication 1, dans lequel les données de fréquences d'utilisation sont actualisées (56) en fonction des informations de système reçues en provenance du réseau (20).

7. Appareil de communication mobile, comprenant :
- un dispositif de réception configuré pour recevoir des données de fréquences d'utilisation d'au moins un distributeur de services en provenance d'un réseau (20) ;
- une mémoire pour mémoriser les données de fréquences d'utilisation liées à chaque distributeur de services respectif ; et
- un dispositif de traitement configuré pour obtenir (S1) une fréquence d'utilisation mémorisée associée à un distributeur de services précis en provenance de la mémoire, réaliser (S2) une recherche de cellule à la fréquence d'utilisation obtenue, et réaliser (S4) une autre recherche de cellule en fonction du balayage de bandes de fréquences si aucune recherche de cellule à une fréquence d'utilisation mémorisée associée au distributeur de services précis n'est réussie.

8. Appareil selon la revendication 7, dans lequel le dispositif de traitement est configuré pour actualiser (56) les données de fréquences d'utilisation, en fonction des informations de système reçues en provenance du réseau (20).
